# EUROPEAN PATENT SPECIFICATION

(11) **EP 0 721 971 B1**
(45) Date of publication and mention of the grant of the patent: **13.09.2000**
(21) Application number: 96300240.7
(22) Date of filing: 12.01.1996
(51) Int. Cl.: C08K 9/06, C08K 3/36, C08L 21/00

(54) **Process for preparing pneumatic tires**
Verfahren zur Herstellung von Luftreifen
Procédé de fabrication de bandages pneumatiques

(30) Priority: 13.01.1995 JP 450595
(43) Date of publication of application: 17.07.1996
(73) Proprietor: Bridgestone Corporation, Tokyo (JP)
(72) Inventor: Araki, Shunji, Kodaira City, Tokyo (JP); Yanagisawa, Kazuhiro, Kodaira City, Tokyo (JP)
(74) Representative: Whalley, Kevin

(56) References cited:
- EP-A- 0 580 370
- US-A- 3 768 537
- PATENT ABSTRACTS OF JAPAN vol. 018 no. 639 (C-1282) ,6 December 1994 & JP-A-06 248116 (BRIDGESTONE CORP) 6 September 1994,
- DATABASE WPI Week 9314, Derwent Publications Ltd., London, GB; AN 93-112843 & JP 5 051 484 A
- IRVING SKEIST: 'Handbook of Adhesives', 1977, 2ND EDITION, VAN NOSTRAND REINHOLD COMPANY, NEW YORK * page 649 - page 651 *

## Description

This invention relates to a method of preparing a rubber composition, in particular for use in the tread of a pneumatic tire. By means of the invention there may be obtained pneumatic tires simultaneously establishing excellent wear resistance and low rolling resistance.

Carbon black has long been used as a filler for the reinforcement of rubber articles because carbon black has high reinforcing property and wear resistance as compared with other fillers. At the same time, it is recently demanded to reduce heat build-up of compound rubber in order to save fuel consumption of an automobile under social demand of energy-saving and resource-saving.

If it is intended to reduce the heat build-up of the compound rubber by the carbon black, it is considered to fill a small amount of carbon black or use carbon black having a large particle size. Even in this case, it is known that the reduction of heat build-up is in conflict with the reinforcing property and the wear resistance.

On the other hand, silica is known as another reinforcing filler for the reduction of heat build-up in the compound rubber and is reported in many patents such as JP-A-3-252431 up to the present.

However, the silica tends to form aggregate of particles through hydrogen bond of silanol group as a surface functional group, so that it is necessary to prolong the kneading time for improving the dispersion of silica particles into rubber. When the dispersion of silica particles into rubber is insufficient, the Mooney viscosity of the compound rubber becomes high and the processability such as extrusion or the like is poor.

Since the surface of the silica particle is acidic, it adsorbs a basic substance used as a vulcanization accelerator in the vulcanization of a rubber composition, and hence the vulcanization is not sufficient and the modulus of elasticity of the vulcanized rubber is not raised.

In order to solve these problems, silane coupling agents have been incorporated into the rubber compositions, but the dispersion of silica has not yet reached a sufficient level, and particularly it is difficult to industrially obtain good dispersion of the silica in the rubber.

In JP-A-5-51484 is disclosed the use of a silylating agent for improving the dispersion of silica. In this case, silica should be reacted with the silylating agent for a short time during the kneading, so that the reaction efficiency is not sufficient. Further, the silylating agent has a low boiling point and evaporates during kneading, so that the reaction is not sufficient.

In JP-B-63-2886 and JP-A-6-157825 is disclosed the use of a hydrophobic precipitated silica. Since the precipitated silica is subjected to a complete hydrophobization treatment, the silanol group to be reacted with the silane coupling agent is not existent on the surface of the silica at all, so that the reinforcement of rubber is not sufficiently attained.

It is, therefore, an object of the invention to solve the aforementioned problems of the conventional techniques and to provide rubber compositions for use in treads of pneumatic tires having improved wear resistance and low rolling resistance by improving the dispersion of silica into tread rubber.

The inventors have made various studies with respect to the dispersion of silica into rubber and found that the wear resistance and low rolling resistance of the tire can simultaneously be established by using a rubber composition containing a partially hydrophobizated silica in a tread rubber and as a result the invention has been accomplished.

The invention in a first aspect provides a method of preparing a rubber composition by dispersing partially hydrophobizated silica into a rubber ingredient comprising natural rubber and/or synthetic diene rubber such that said rubber composition comprises 10-85 parts by weight of precipitated silica, which has been subjected to a surface treatment with an organosilicon compound so as to satisfy a hydrophobization ratio (A) of 15% - 65% represented by the following equation, based on 100 parts by weight of natural rubber and/or synthetic diene rubber:

A = 100 - (DBA/DBA') x 100

wherein DBA is di-n-butylamine adsorption of silica after surface treatment and DBA' is di-n-butylamine adsorption of silica before surface treatment, wherein DBA adsorption is measured according to R. Meyer: Kautschuk und Gummi., 7(8), 180-182 (1954);
and wherein the organosilicon compound is at least one substance selected from compounds represented by the following general formulae (1)-(5) and low molecular weight cyclic polysiloxane:

R₄₋ₙ-Si(OH)ₙ (1)

R₄₋ₙ-SiClₙ (2)

(RO)₄₋ₙ-SiRₙ (3)

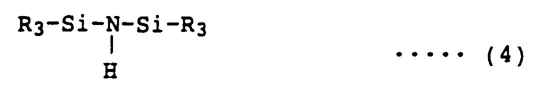

R₃-Si-S-S-Si-R₃ (5)

wherein n is an integer of 1-3, and R is a straight or branched chain, saturated or unsaturated, aromatic or alicyclic hydrocarbon group.

The invention in a second aspect provides, a method of preparing a pneumatic tire, comprising preparing a rubber composition by the method according to the first aspect of the invention, and using said rubber composition in the tread of a pneumatic tire.

The rubber ingredient used in the rubber composition for tire tread is natural rubber and/or synthetic diene rubber.

As the synthetic diene rubber, mention may be made of synthetic polyissoprene rubber, polybutadiene rubber and styrene-butadiene copolymer rubber.

These rubber ingredients may be used alone or in admixture.

The partially hydrophobizated silica used in the rubber composition prepared by the method according to the invention has a hydrophobization ratio of 15-65%, preferably 30-60%. When the hydrophobization ratio is less than 15%, it is difficult to obtain a sufficient wear resistance, while when it exceeds 65%, the effect of sufficiently improving the dispersion of the silica into rubber is not obtained and the wear resistance and low rolling resistance are not improved.

In such a silica, the di-n-butylamine (DBA) adsorption after the surface treatment is preferably within a range of 100-230 mmol/kg. When the DBA adsorption is less than 100 mmol/kg, the sufficient reinforcing property can not be maintained and the wear resistance is insufficient, while when it exceeds 230 mmol/kg, the viscosity of the rubber composition does not lower to a satisfactory level and hence the dispersion of silica becomes poor to deteriorate the wear resistance.

The amount of the partially hydrophobizated silica used in the rubber composition prepared by the method according to the invention is 10-85 parts by weight based on 100 parts by weight of the rubber ingredient. When the amount is less than 10 parts by weight, the effect of improving the wear resistance and rolling resistance by the dispersion of silica is less, while when it exceeds 85 parts by weight, degradation of processability in a roll burgy or the like is caused.

The organosilicon compound used for the surface treatment of the partially hydrophobizated silica is at least one substance selected from the group consisting of compounds represented by the following general formulae (1)-(5) and low molecular weight cyclic polysiloxane:

R₄₋ₙ-Si(OH)ₙ (1)

R₄₋ₙ-SiClₙ (2)

(RO)₄₋ₙ-SiRₙ (3)

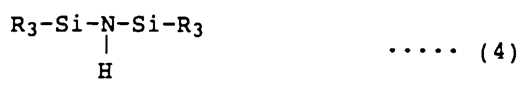

R₃-Si-S-S-Si-R₃ (5)

wherein n is an integer of 1-3, and R is a straight or branched chain, saturated or unsaturated, aromatic or alicyclic hydrocarbon group.

As the organosilicon compound, mention may be made of trimethyl silanol, trimethylmonochloro silane, dimethyldimethoxy silane, diphenyldimethoxy silane, hexamethyl disilazane and hexamethyl disilthiane.

In the formation of the partially hydrophobizated silica in the method according to the invention, the method of treating the surface of the silica with the organosilicon compound is not particularly restricted, but the use of a highspeed flowing mixer such as Henschel mixer or the like is favorable because uniformity in the treatment is easily obtained.

The amount of the organosilicon compound used in the surface treatment of the silica is adjusted so as to provide the desired hydrophobization ratio in accordance with the kinds of silica and organosilicon compound used. The water content contained in the silica during the treatment is preferable to be adequate (about 3-10%) because the organosilicon compound has a functional group for hydrolysis. After the surface treatment, the silica may be subjected to a heating treatment.

According to the invention, the number of silanol groups existing on the surface of the silica is adequately decreased without changing the particle size by partially hydrophobizing the silica surface with the organosilicon compound at a particular hydrophobization ratio, whereby the agglomeration of silica due to hydrogen bond of such silanol group is controlled to improve the dispersion of silica into rubber, while the proper number of silanol groups is retained on the silica surface to ensure the reinforcing property to rubber to a certain extent. Thus, a good wear resistance and low heat build-up of the rubber composition, which are in conflict with each other, can now simultaneously be achieved.

Moreover, DBA adsorption is a measure for indicating the degree of hydrophobization in the silica. Adsorption is caused by ion bond between amino groups in molecule of DBA and silanol groupsexisting on the silica surface. A large adsorption shows that the hydrophobization is not so conducted or the number of silanol groups in the silica surface is large, while a small adsorption shows that the hydrophobization is promoted.

According to the invention, carbon black may be used as a reinforcing filler, if necessary. The kind of carbon black used is not particularly restricted, but carbon black SAF, HAF or the like may preferably be used. In any case, the carbon black preferably has a dibutylphthalate (DBP) oil absorption (ml/100 g) satisfying the following equation:

DBP oil absorption ≧ 0.19 x N₂SA + 90

wherein N₂SA is a specific surface area (m²/g) of nitrogen adsorption of carbon black. Moreover, an absolute value of N₂SA is applied to this equation. When carbon black satisfies the relation between DBP and N₂SA represented by the above equation, the effect of improving the wear resistance and low rolling resistance by the addition of the silica in the method according to the invention can be developed at maximum.

The amount of carbon black used is preferably not more than 80 parts by weight per 100 parts by weight of the rubber ingredient. If the amount exceeds 80 parts by weight, the rolling resistance becomes high and the poor dispersion is caused to degrade the wear resistance.

When the silica is used together with the carbon black, it is preferable that a compounding ratio of silica to carbon black is within a range of 90/10-10/90, more preferably 80/20-20/80. If the compounding ratio of the silica is low, the effect of improving the low rolling resistance may not sufficiently obtained, while when it is too high, the rolling resistance is improved but the wear resistance may be poor in practical use.

In the invention, a silane coupling agent is preferably used for coupling a silanol group remaining on the surface of the partially hydrophobizated silica to the rubber ingredient to form a reinforcing layer.

The amount of the silane coupling agent used is preferably within a range of 1-15% by weight based on the weight of silica. When the amount is less than 1% by weight, a sufficient coupling effect is not obtained, while when it exceeds 15% by weight, gelation of the rubber ingredient may be caused.

As the silane coupling agent used in the invention, use may be made of compounds usually used in the rubber field without restriction, but it is preferable to use at least one compound selected from the compounds represented by the following general formulae (6)-(9):

[(RO)₃SiCₙH₂ₙ]₂Sₘ (6)

(RO)₃SiCₙH₂ₙX (7)

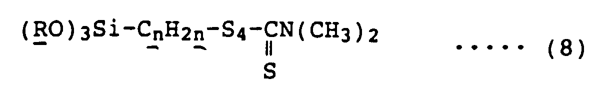

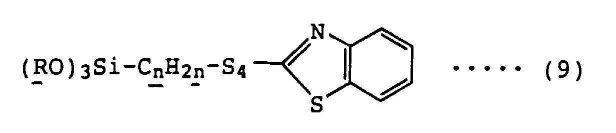

wherein R is an alkyl group having a carbon number of 1-3, n is an integer of 1-8, m is an integer of 1-6, and X is a mercapto group or an amino group.

There are specifically mentioned bis(3-trimethylsilylpropyl) tetrasulfide, α-mercaptopropyl triethoxysilane, α-aminopropyl triethoxysilane, N-phenyl-α-aminopropyl trimethoxysilane, N-β-(aminoethyl)-γ-aminopropyl trimethoxysilane, 3-trimethoxysilylpropyl-N,N-dimethylthiocarbamoyl tetrasulfide and 2-benzothiazyl-3-trimethoxysilylpropyl tetrasulfide.

The rubber composition prepared by the method according to the invention may be compounded with proper amounts of various additives usually used in the rubber field such as other reinforcing filler, vulcanizing agent, vulcanization accelerator, antioxidant and softening agent if necessary.

By using the rubber composition prepared by the method according to the invention in a tire tread, there can be provided pneumatic tires having balancedly improved wear resistance and rolling resistance.

The following examples are given in illustration of the invention and are not intended as limitations thereof. In the examples, part and % are by weight otherwise specified.

Various tests are carried out after a pneumatic radial tire for passenger car having a tire size of 185/70R13 is prepared according to usual manner.

The measurement of properties is made as follows:

### 1) DBA adsorption

It is measured according to R. Meyer: Kautschuk und Gummi., 7(8), 180-182 (1954). That is, the partially hydrophobizated silica particles are dried at 105°C for 2 hours and weighed to obtain 250 mg of a sample. This sample is added with 50 ml of 1/500 normal DBA petroleum benzine solution and left to stand at 20°C for 2 hours. Then 25 ml of a supernatant liquid is taken out and added with 5 ml of chloroform and 2-3 droplets of a crystal violet indicator, which is titrated with an acetic anhydride solution of 1/100 normal perchloric acid. A titrated value when color changes from violet to blue is A ml. Separately, a titrated value in blank test containing no sample is B ml. DBA adsorption is calculated according to the following equation:

DBA adsorption (mmol/kg) = 80(B-A) x f

wherein f is the potency of the 1/100 normal perchloric acid solution.

### 2) Nitrogen adsorption

It is measured according to a method B described in ASTM D-3037-84.

### 3) DBP oil absorption

It is measured according to a method A described in item 6.1.2 of JIS K6221.

### 4) Rolling resistance

The rolling resistance index indicating the rolling resistance is calculated according to the following equation after the tire is run on a drum of 1.7 m in outer diameter rotating at a certain speed and the rotation of the drum is stopped to measure inertia moment of the tire decreased to a certain speed:

Rolling resistance index = M/M' x 100

wherein M is inertia moment of control tire and M' is inertia moment of test tire. The larger the index value, the lower the rolling resistance.

### 5) Wear resistance

The wear resistance index indicating the wear resistance is calculated according to the following equation after the tire is actually run on road over a given distance and then remaining groove depth is measured at 10 places to determine an average value:

Wear resistance index = D'/D x 100

wherein D is an average value of remaining groove depth of control tire and D' is an average value of remaining groove depth of test tire. The larger the index value, the better the wear resistance.

### Preparation of partially hydrophobizated silica

A commercially available precipitated silica is mixed with a necessary amount of a treating agent as an organosilicon compound in Henschel mixer for 7 minutes and hot-dried at 150°C for 30 minutes to obtain given silica to be used in the examples. The kind of commercially available product used, kind of treating agent and properties of resulting silica are shown in Table 1.

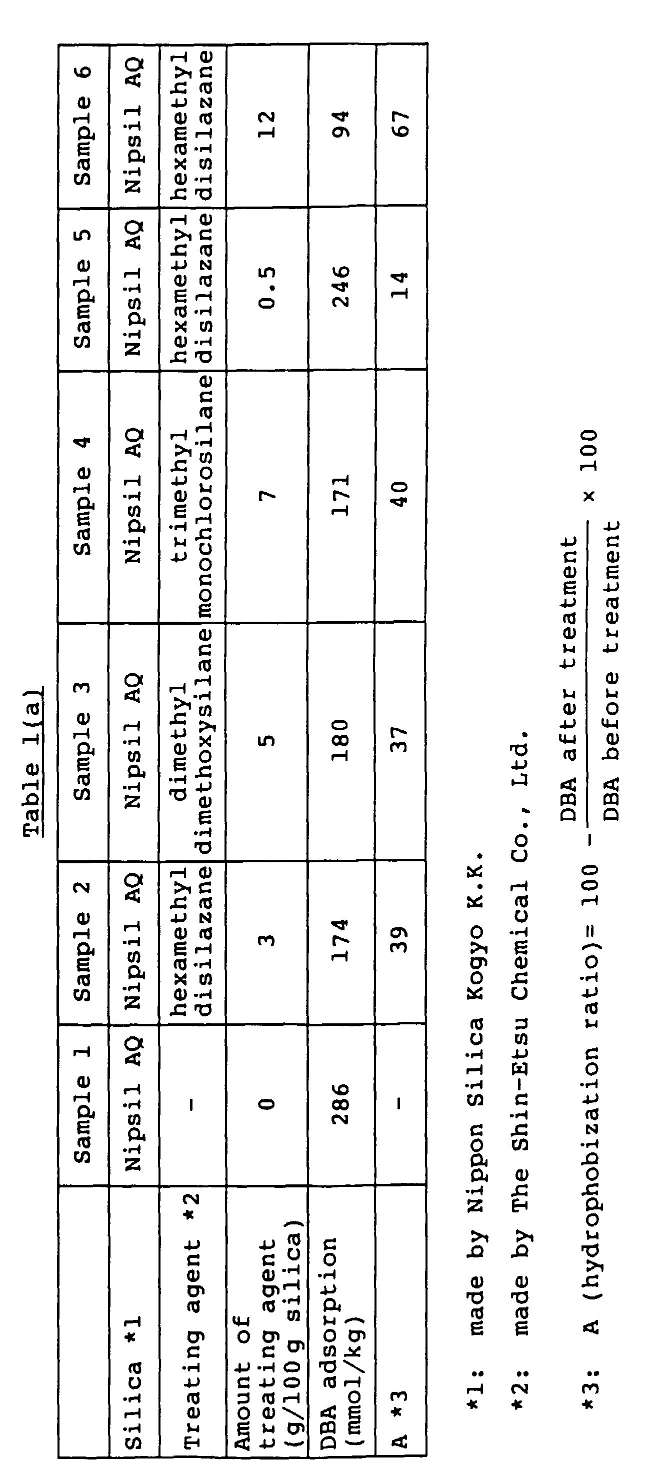

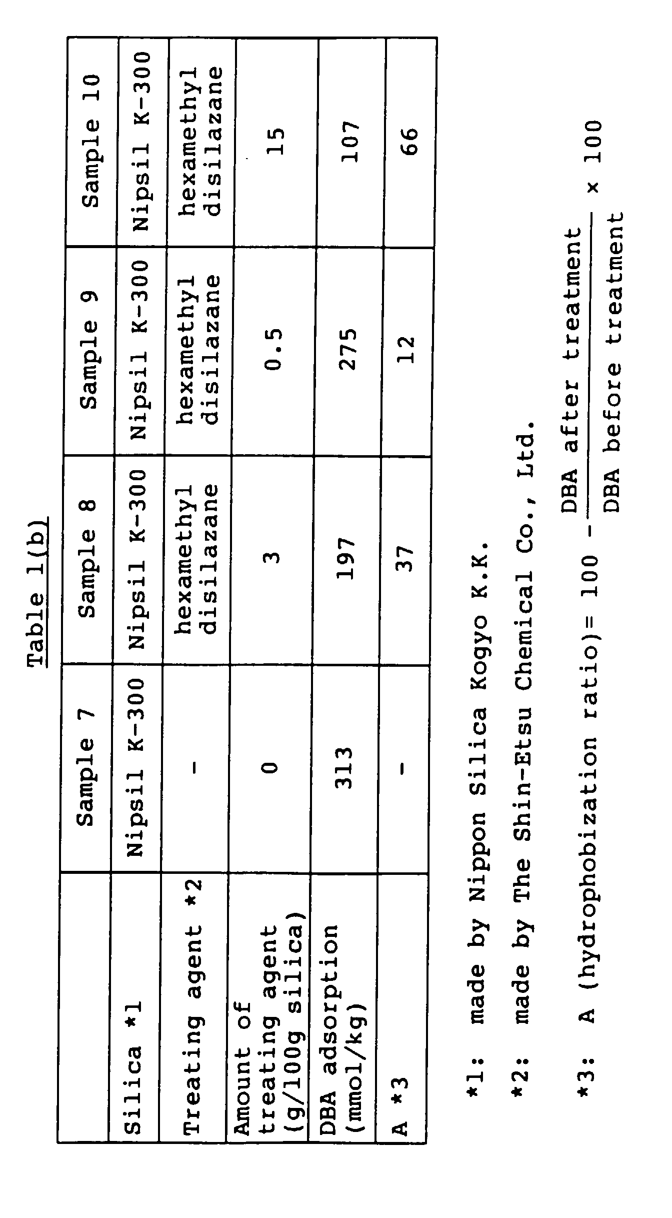

The properties of carbon blacks used in the examples are shown in Table 2.

**Table 2**

| Carbon black *2 | Seast 3 | Seast 3H | Seast 600 | Seast 6 | Seast 9 | Seast 9H |
|---|---|---|---|---|---|---|
| Specific surface area of nitrogen adsorption (N₂SA) (m²/g) | 79 | 82 | 106 | 117 | 142 | 142 |
| DBP oil absorption (ml/100 g) | 101 | 126 | 75 | 115 | 115 | 130 |
| 0.19×(N₂SA)+90 | 105 | 106 | 110 | 112 | 117 | 117 |
| *1: made by Tokai Carbon Co., Ltd. | | | | | | |

### Examples 1-13, Comparative Examples 1-4

A rubber composition is prepared according to a compounding recipe shown in Table 3 and is used in a tread of a tire. The properties of the tire are also shown in Table 3.

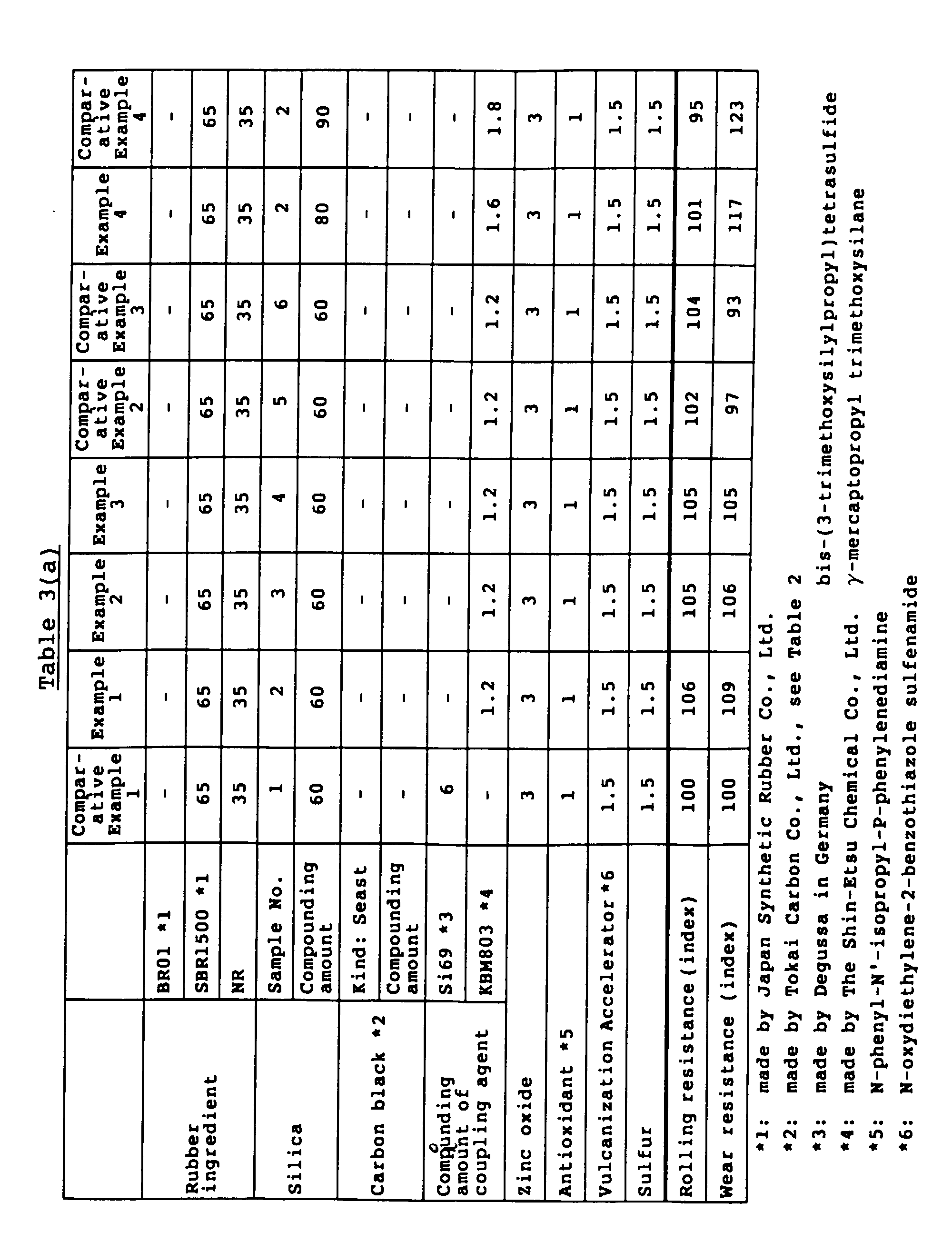

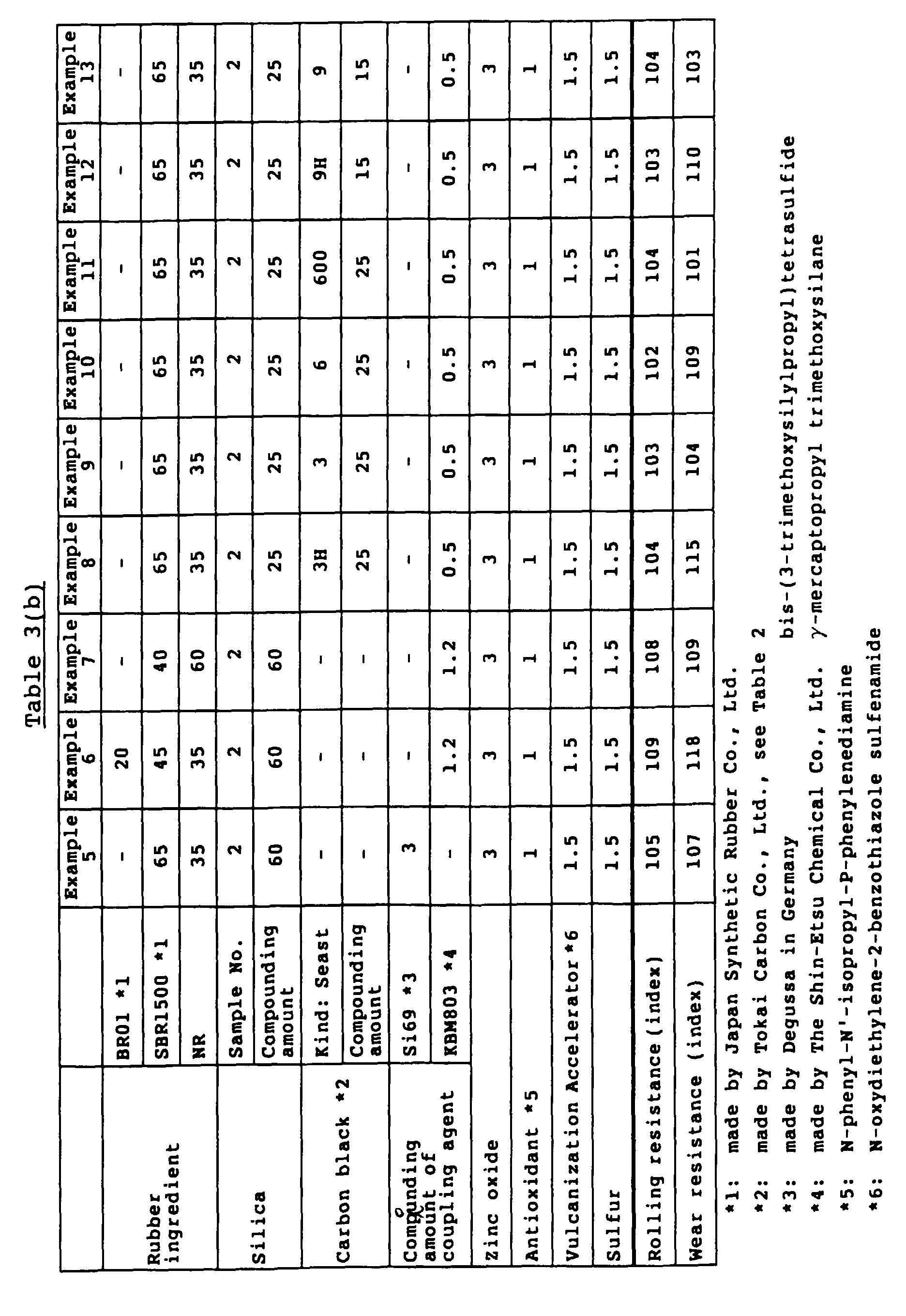

In Table 3, the pneumatic tire having the tread rubber made from a rubber composition containing commercially available silica is shown in Comparative Example 1. When Examples 1-3 are compared with Comparative Example 1, it can be seen that the low rolling resistance and wear resistance can simultaneously be achieved in the pneumatic tires prepared by the method according to the invention. Further, as seen from the comparison between Example 5 and Comparative Example 1, when the rubber composition containing the partially hydrophobizated precipitated silica is used in the tread, even if the amount of the silane coupling agent used is decreased, the resulting tire exhibits good wear resistance and low rolling resistance.

Comparative Example 2 shows a pneumatic tire having the tread made from the rubber composition containing the partially hydrophobizated silica with a hydrophobization ratio A smaller than the lower limit defined in the invention, and has poor wear resistance as compared with Examples 1-3. Although the cause is not clear, it is presumed that there is a synergistic effect between the hydrophobizated silica and the silane coupling agent. That is, when the hydrophobization ratio is too small, the modulus of elasticity tends to be decreased, and consequently the wear resistance of the tire is degraded though the partially hydrophobizated silica is used.

Comparative Example 3 shows a pneumatic tire having the tread made from the rubber composition containing the partially hydrophobizated silica with a hydrophobization ratio A larger than the upper limit defined in the invention, in which the rolling resistance is good but the wear resistance is considerably degraded as compared with Examples 1-3. This is considered due to the fact that since the hydrophobization on the silica surface is extremely promoted, the number of silanol groups existing on the silica surface is very small or zero and hence the reinforcement through the interaction with the rubber ingredient is not obtained.

Even when the composition of synthetic diene rubbers in the rubber composition is changed as shown in Examples 6 and 7, the rolling resistance and the wear resistance are improved.

Even when the rubber composition using carbon black having a higher DBP oil absorption to N₂SA in addition to the partially hydrophobizated silica is used in the tread as in Examples 8-13, the wear resistance and the rolling resistance are improved.

As mentioned above, according to the invention, the low rolling resistance and the wear resistance can simultaneously be established by using the partially hydrophobizated silica in the rubber composition for the tire tread to largely improve the dispersion of the silica into rubber without degrading the reinforcing property to rubber.

## Claims

1. A method of preparing a rubber composition by dispersing partially hydrophobizated silica into a rubber ingredient comprising natural rubber and/or synthetic diene rubber such that said rubber composition comprises 10-85 parts by weight of precipitated silica, which has been subjected to a surface treatment with an organosilicon compound so as to satisfy a hydrophobization ratio (A) of 15% - 65% represented by the following equation, based on 100 parts by weight of natural rubber and/or synthetic diene rubber:
A = 100 - (DBA/DBA') x 100
wherein DBA is di-n-butylamine adsorption of silica after surface treatment and DBA' is di-n-butylamineadsorption of silica before surface treatment, wherein DBA adsorption is measured according to R. Meyer: Kautschuk und Gummi., 7(8), 180-182 (1954);
and wherein the organosilicon compound is at least one substance selected from compounds represented by the following general formulae (1)-(5) and low molecular weight cyclic polysiloxane:
R₄₋ₙ-Si(OH)ₙ (1)
R₄₋ₙ-SiClₙ (2)
(RO)₄₋ₙ-SiRₙ (3) 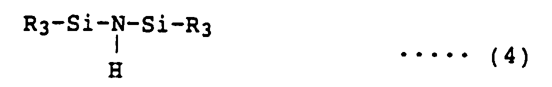
R₃-Si-S-S-Si-R₃ (5)
wherein n is an integer of 1-3, and R is a straight or branched chain, saturated or unsaturated, aromatic or alicyclic hydrocarbon group.

2. A method as claimed in claim 1, characterized in that the rubber composition further contains not more than 80 parts by weight, based on 100 parts by weight of the rubber ingredient, of carbon black as a reinforcing filler.

3. A method as claimed in claim 2, characterized in that the carbon black has a dibutylphthalate (DBP) oil absorption satisfying the following equation:
DBP oil absorption ≧ 0.19 x N₂SA + 90
wherein N₂SA is specific surface area of nitrogen adsorption of carbon black and is measured according to method B described in ASTM D-3037-84; and wherein DBP oil absorption is measured according to method A described in item 6.1.2 of JIS K6221.

4. A method as claimed in any of claims 1 to 3, characterized in that the rubber composition further contains 1-15% by weight of a silane coupling agent based on the weight of silica.

5. A method as claimed in claim 4, characterized in that the silane coupling agent is at least one compound selected from compounds represented by the following general formulae (6)-(9):
[(RO)₃SiCₙH₂ₙ]₂Sₘ (6)
(RO)₃SiCₙH₂ₙX (7) 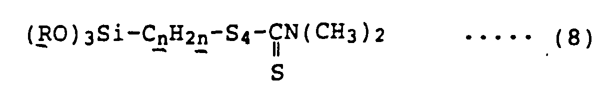 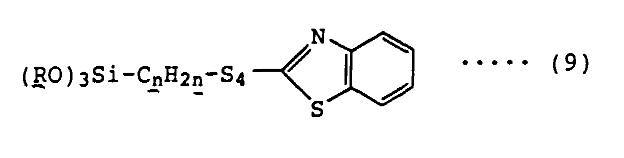
wherein R is an alkyl group having a carbon number of 1-3, n is an integer of 1-8, m is an integer of 1-6, and X is a mercapto group or an amino group.

6. A method as claimed in any of claims 1 to 5, characterized in that said hydrophobization ratio (A) is 30% - 60%.

7. A method of preparing a pneumatic tire, comprising preparing a rubber composition by the method as claimed in any of claims 1 to 6, and using said rubber composition in the tread of a pneumatic tire.

## Patentansprüche

1. Methode zum Herstellen einer Gummizusammensetzung durch teilweises Dispergieren von hydrophobisierter Silika in einen Gummibestandteil, der natürlichen Gummi und/oder synthetischen Diengummi aufweist, und zwar so, daß die Gummizusammensetzung auf 100 Gewichtsteile natürlichen Gummi und/oder synthetischen Diengummi 10-85 Gewichtsteile ausgefällte Silika aufweist, die einer Oberflächenbehandlung mit einer Organosilikonverbindung unterworfen wurde, und zwar so, daß ein durch die folgende Gleichung wiedergegebenes Hydrophobisierungsverhältnis (A) von 15% bis 65% erhalten wurde:
A = 100 - (DBA/DBA') x 100
wobei DBA die Di-n-butylamin-Adsorption von Silika nach der Oberflächenbehandlung ist, und DBA' die Di-n-butylamin-Adsorption von Silika vor der Oberflächenbehandlung ist, wobei die DBA-Adsorption gemäß R. Meyer: Kautschuk und Gummi, 7(8), 180-182 (1954) gemessen wird;
und wobei die Organosilikonverbindung mindestens eine Substanz ist, die aus Verbindungen ausgewählt ist, die durch die folgenden allgemeinen Formeln (1)-(5) und zyklisches Polysiloxan mit niedrigem Molekulargewicht repräsentiert werden:
R₄₋ₙ-Si(OH)ₙ (1)
R₄₋ₙ-SiClₙ (2)
(RO)₄₋ₙ-SiRₙ (3) 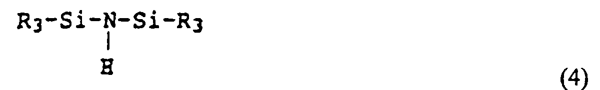
R₃-Si-S-S-Si-R₃ (5)
wobei n eine ganze Zahl von 1-3 ist, und R eine geradkettige oder verzweigtkettige, gesättigte oder ungesättigte, aromatische oder alizyklische Kohlenwasserstoffgruppe ist.

2. Methode wie in Anspruch 1 beansprucht, dadurch gekennzeichnet, daß die Gummizusammensetzung weiterhin auf 100 Gewichtsteile des Gummibestandteils nicht mehr als 80 Gewichtsteile Ruß als Aktivfiiller enthält.

3. Methode wie in Anspruch 2 beansprucht, dadurch gekennzeichnet, daß der Ruß eine Dibutylphthalat (DBP)-Ölabsorption hat, welche die folgende Gleichung erfüllt:
DBP-Ölabsorption ≥ 0,19 x N₂SA + 90
wobei N₂SA die spezifische Stickstoffadsorptionsoberfläche von Ruß ist, und gemäß der in ASTM D-3037-84 beschriebenen Methode B gemessen wird; und wobei die DBP-Ölabsorption gemäß der in Abschnitt 6.1.2 von JIS K6221 beschriebenen Methode A gemessen wird.

4. Methode wie in irgendeinem der Ansprüche 1 bis 3 beansprucht, dadurch gekennzeichnet, daß die Gummizusammensetzung weiterhin 1-15 Gewichtsprozent eines Silan-Haftvermittlers, bezogen auf das Gewicht der Silika, enthält.

5. Methode wie in Anspruch 4 beansprucht, dadurch gekennzeichnet, daß der Silan-Haftvermittler mindestens eine Verbindung ist, die aus den Verbindungen ausgewählt ist, die durch die folgenden allgemeinen Formeln (6)-(9) repräsentiert werden:
[(RO)₃SiCₙH₂ₙ]₂Sₘ (6)
(RO)₃SiCₙH₂ₙX (7) 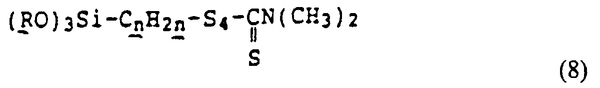 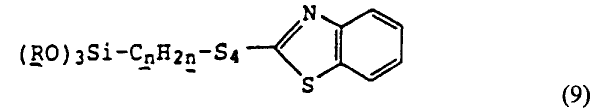
wobei R eine Alkylgruppe ist, die 1-3 Kohlenstoffatome hat, n eine ganze Zahl von 1-8 ist, m eine ganze Zahl von 1-6 ist, und X eine Mercaptogruppe oder eine Aminogruppe ist.

6. Methode wie in irgendeinem der Ansprüche 1 bis 5 beansprucht, dadurch gekennzeichnet, daß das Hydrophobisierungsverhältnis (A) 30%-60% beträgt.

7. Methode zum Herstellen eines Luftreifens, bei der eine Gummizusammensetzung nach der in irgendeinem der Ansprüche 1 bis 6 beanspruchten Methode hergestellt wird, und die Gummizusammensetzung bei der Lauffläche eines Luftreifens verwendet wird.

## Revendications

1. Procédé de préparation d'une composition de caoutchouc par dispersion de silice partiellement hydrophobisée dans un ingrédient de caoutchouc, comprenant du caoutchouc naturel et/ou du caoutchouc diénique synthétique, de sorte que ladite composition de caoutchouc comprend 10 à 85 parties en poids de silice précipitée, ayant été soumise à un traitement de surface avec un composé organosilicié, de sorte à satisfaire à un rapport d'hydrophobisation (A) de 15% à 65%, représenté par l'équation suivante, basée sur 100 parties en poids de caoutchouc naturel et/ou de caoutchouc diénique synthétique:
A = 100 - (DBA/DBA') x 100
où DBA représente l'adsorption de di-n-butylamine de la silice après le traitement de surface, DBA' représentant l'adsorption de di-n-butylamine de la silice avant le traitement de surface, l'adsorption DBA étant mesurée selon R. Meyer: Kautschuk und Gummi., 7(8), 180-182 (1954);
et où le composé organosilicié est au moins une substance sélectionnée parmi les composés représentés par les formules générales ci-dessous (1) - (5) et le polysiloxane cyclique de faible poids moléculaire:
R₄₋ₙ-Si(OH)ₙ (1)
R₄₋ₙ-SiClₙ (2)
(RO)₄₋ₙ-SiRₙ (3) 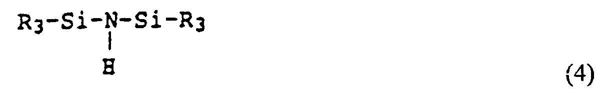
R₃-Si-S-S-Si-R₃ (5)
où n est un nombre entier compris entre 1 et 3, R étant un groupe d'hydrocarbure à chaîne droite ou ramifiée, saturée ou non saturée, aromatique ou alicyclique.

2. Procédé selon la revendication 1, caractérisé en ce que la composition de caoutchouc ne contient en outre pas plus de 80 parties en poids, sur la base de 100 parties en poids de l'ingrédient de caoutchouc, de noir de carbone comme charge de renforcement.

3. Procédé selon la revendication 2, caractérisé en ce que le noir de carbone présente une absorption d'huile de phtalate de dibutyle (DBP) satisfaisant l'équation ci-dessous:
Absorption d'huile DBP ≥ 0,19 x N₂SA + 90
où N₂SA représente une aire de surface spécifique de l'adsorption d'azote du noir de carbone et est mesurée selon un procédé B décrit dans ASTM D-3037-84; l'absorption d'huile DBP étant mesurée selon un procédé A décrit dans le point 6.1.2 de JIS K6221.

4. Procédé selon l'une quelconque des revendications 1 à 3, caractérisé en ce que la composition de caoutchouc contient en outre 1 à 15% en poids d'un agent de couplage de silane sur la base du poids de la silice.

5. Procédé selon la revendication 4, caractérisé en ce que l'agent de couplage de silane est au moins un composé sélectionné parmi les composés représentés par les formules générales ci-dessous (6) à (9):
[(RO)₃SiCₙH₂ₙ]₂Sₘ (6)
(RO)₃SiCₙH₂ₙX (7) 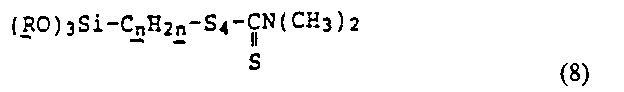 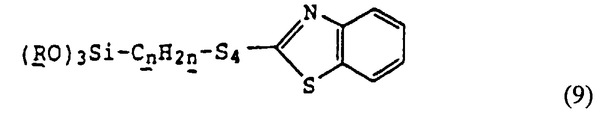
où R représente un groupe alkyle ayant un nombre d'atomes de carbone de 1 à 3, n étant un nombre entier de 1 à 8 et m étant un nombre entier de 1 à 6, X représentant un groupe mercapto ou un groupe amino.

6. Procédé selon l'une quelconque des revendications 1 à 5, caractérisé en ce que ledit rapport d'hydrophobisation (A) est compris entre 30% et 60%.

7. Procédé de préparation d'un bandage pneumatique, comprenant la préparation d'une composition de caoutchouc par le procédé selon l'une quelconque des revendications 1 à 6 et l'utilisation de ladite composition de caoutchouc dans la bande de roulement d'un bandage pneumatique.
